# EUROPEAN PATENT APPLICATION

(11) **EP 1 662 425 A1**
(43) Date of publication of application: **31.05.2006**
(21) Application number: 03818294.5
(22) Date of filing: 22.08.2003
(51) Int. Cl.: G06K 17/00

(54) **IC CARD OPERATION MANAGING SYSTEM**

(71) Applicant: FUJITSU LIMITED, Kawasaki-shi, Kanagawa 211-8588 (JP)
(72) Inventor: HOSOGOE, Takashi, c/o Fujitsu Limited, Kawasaki-shi, Kanagawa 211-8588 (JP)
(74) Representative: Sunderland, James Harry
(86) International application number: PCT/JP2003/010637
(87) International publication number: WO 2005/020134

(57) **Abstract**

In a data transfer device which performs a data transfer processing to transfer data of a plurality of service applications in an old IC card to a new IC card, a list information acquisition unit acquires application list information of the plurality of service applications in the old IC card based on card identifier information acquired from the old IC card. A data acquisition unit acquires the transferred data of the plurality of service applications in the old IC card based on the acquired application list information, and records the transferred data in the new IC card.

## Description

### CROSS-REFERENCE TO RELATED APPLICATION

This application is a U.S. continuation application which is filed under 35 USC 111(a) and claims the benefit under 35 USC 120 and 365(c) of International Application No. PCT/JP2003/010637, filed on August 22, 2003, the entire contents of which are hereby incorporated by reference.

### BACKGROUND OF THE INVENTION

### 1. Field of the Invention

The present invention relates to an IC card operation management system which performs processing for taking over the data of service in an old IC card when the old IC card is switched to a new IC card.

### 2. Description of the Related Art

In a conventional system, when a IC card used in a plurality of services is switches to a new IC card due to expiration of the term of validity, the life of an IC chip, breakage, etc. of the old IC card, the user (card holder) must go out, after having a new IC card published, to the authority of the service provider for each service, and must perform processing for taking over the data of service remaining on the old IC card to the new IC card.

A combination of service applications which are recorded in the IC card at the time of issuing the old IC card becomes different from that at the time of reissuing of a new IC card if addition or deletion of some services is performed after the time of issuing the old IC card.

In such cases, when the new IC card is published by using the conventional system, there may be a problem in that it is returned to the combination of service applications at the time of issuing the old IC card.

In order to take over completely the data remaining on the old IC card to the new IC card, it is necessary to change and publish the combination of service applications which should be recorded for every card according to the data of each IC card at the time of issue of the new IC card by using the data managed in an IC card operation management system.

For example, in order for the user to have a single IC card in which ten kinds of service applications are recorded being switched to a new IC card from the old IC card and to take over the data on the old IC card to the new IC card, the user must visit ten different places where the respective terminals of the service providers are installed.

While taking over of the data of the IC card is not completed, the user needs to carry both the old IC card and the new IC card.

If the new IC card is issued and the combination of service applications is returned to that at the time of issuing the old IC card, the card hold who receives the new IC card must take the time and efforts to download the data of service application again.

When taking over the combination of service applications at the time of issuing the new IC card by using the card management data, the conventional system usually publishes many IC cards at once using a card issuing machine of a card management system. In this case, the time lag for several weeks will occur until the new IC cards are distributed to the card holders. For this reason, when a card holder uses a new IC card, there may be a case in which the combination of service applications is already changed.

### SUMMARY OF THE INVENTION

An object of the present invention is to provide an improved IC card operation management system in which the above-described problems are eliminated.

Another object of the present invention is to provide a data transfer device which has a function to take over the data of a plurality of services installed in an IC card collectively when switching the IC card to a new IC card.

Another object of the present invention is to provide an IC card operation management system which enables the card holder to take over the data of all the services at one place by using the above-mentioned data transfer device.

In order to achieve the above-mentioned objects, the present invention provides a data transfer device which performs a data transfer processing to transfer data of a plurality of service applications in an old IC card to a new IC card, the data transfer device comprising: a list information acquisition unit acquiring application list information of the plurality of service applications in the old IC card based on card identifier information acquired from the old IC card; and a data acquisition unit acquiring the transferred data of the plurality of service applications in the old IC card based on the acquired application list information, and recording the transferred data in the new IC card.

In order to achieve the above-mentioned objects, the present invention provides an IC card operation management system including a data transfer device, a business application system, and a card management system, the data transfer device performing a data transfer processing to transfer data of a plurality of service applications in an old IC card to a new IC card and comprising: an identifier information acquisition unit requesting card identifier information to the old IC card and acquiring the card identifier information from the old IC card; a list information acquisition unit requesting application list information of the plurality of service applications in the old IC card to the card management system based on the acquired card identifier information, and acquiring the application list information from the card management system; and a data acquisition unit acquiring the transferred data of the service applications in the old IC card based on the acquired application list information, and recording the transferred data in the new IC card.

According to the data transfer device and the IC card operation management system of the present invention, it is possible for the card holder to take over easily all the services installed in the old IC card and the data of all the service applications to the new IC card by using the data transfer device at one place. It is no longer necessary that the card holder carries the old IC card and the new IC card while taking over of the data on the IC card is not completed as required in the conventional system.

### BRIEF DESCRIPTION OF THE DRAWINGS

Other objects, features and advantages of the present invention will be apparent from the following detailed description when read in conjunction with the accompanying drawings.
FIG. 1 is a diagram for explaining an IC card in which a plurality of services are installed.
FIG. 2 is a diagram for explaining the data transfer function which is performed by the data transfer device of the invention at the time of transferring an old IC card to a new IC card.
FIG. 3 is a block diagram showing the composition of the IC card operation management system in an embodiment of the invention.
FIG. 4 is a block diagram showing the composition of the data transfer device in an embodiment of the invention.
FIG. 5 is a block diagram showing the composition of the IC card operation management system in another embodiment of the invention.
FIG. 6 is a block diagram showing the composition of the IC card operation management system in another embodiment of the invention.
FIG. 7 is a block diagram showing the composition of the data transfer device in another embodiment of the invention.
FIG. 8 is a block diagram showing the composition of the IC card operation management system in another embodiment of the invention.
FIG. 9 is a block diagram showing the composition of the IC card operation management system in another embodiment of the invention.
FIG. 10 is a diagram for explaining the structure of the data of the plurality of service applications which are recorded on an IC card.
FIG. 11 is a diagram for explaining the structure of a database in a card management system in the IC card operation management system of FIG. 3.
FIG. 12 is a diagram for explaining the structure of a database in a business application system in the IC card operation management system of FIG. 5.
FIG. 13 is a flowchart for explaining the routine (steps S1 to S11) of the data transfer processing which is performed by the data transfer device in the IC card operation management system of FIG. 3.
FIG. 14 is a flowchart for explaining the routine (steps S12 to S21) of the data transfer processing which is performed by the data transfer device in the IC card operation management system of FIG. 3.
FIG. 15 is a flowchart for explaining the routine (steps S22 to S28) of the data transfer processing which is performed by the data transfer device in the IC card operation management system of FIG. 3.
FIG. 16 is a flowchart for explaining the routine (steps S29 to S35) of the data transfer processing which is performed by the data transfer device in the IC card operation management system of FIG. 3.
FIG. 17 is a diagram for explaining the card installed service application information acquisition and display processing which is performed by the IC card operation management system in an embodiment of the invention.
FIG. 18 is a diagram for explaining the transferred data creation processing which is performed by the IC card operation management system in the embodiment of the invention.
FIG. 19 is a diagram for explaining the service application addition and initialization processing which is performed to the new IC card by the IC card operation management system in the embodiment of the invention.
FIG. 20 is a diagram for explaining the service application personalization processing which is performed to the new IC card by the IC card operation management system in the embodiment of the invention.

### DETAILED DESCRIPTION OF PREFERRED EMBODIMENTS

A description will now be given of an embodiment of the invention with reference to the accompanying drawings.

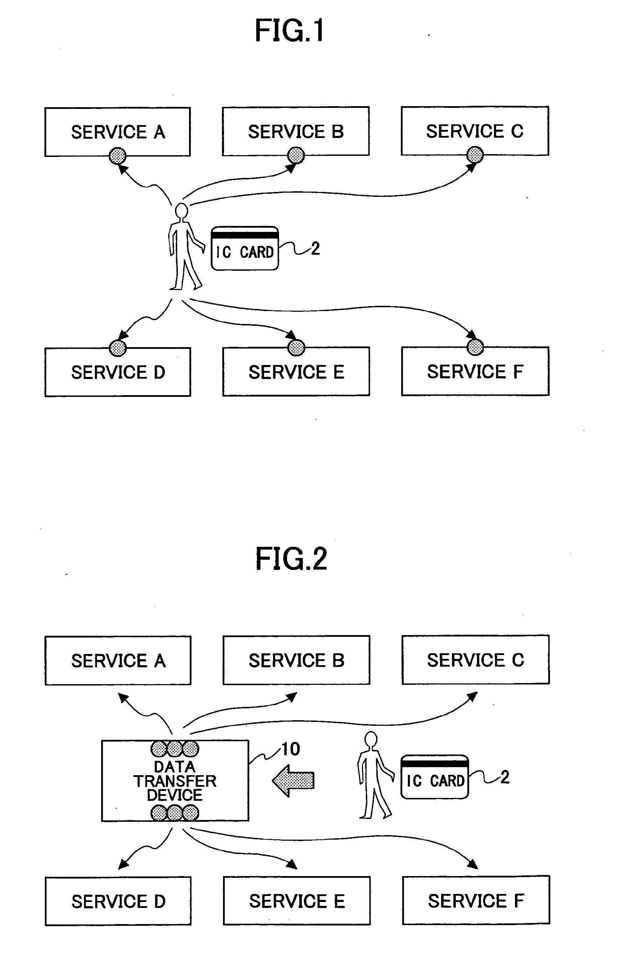

FIG. 1 is a diagram for explaining an IC card in which a plurality of services are installed. As shown in FIG. 1, when the card holder uses the plurality of services (A, B, C, D, E, F, --) with the IC card 2, the data of each service application is recorded in the IC card 2.

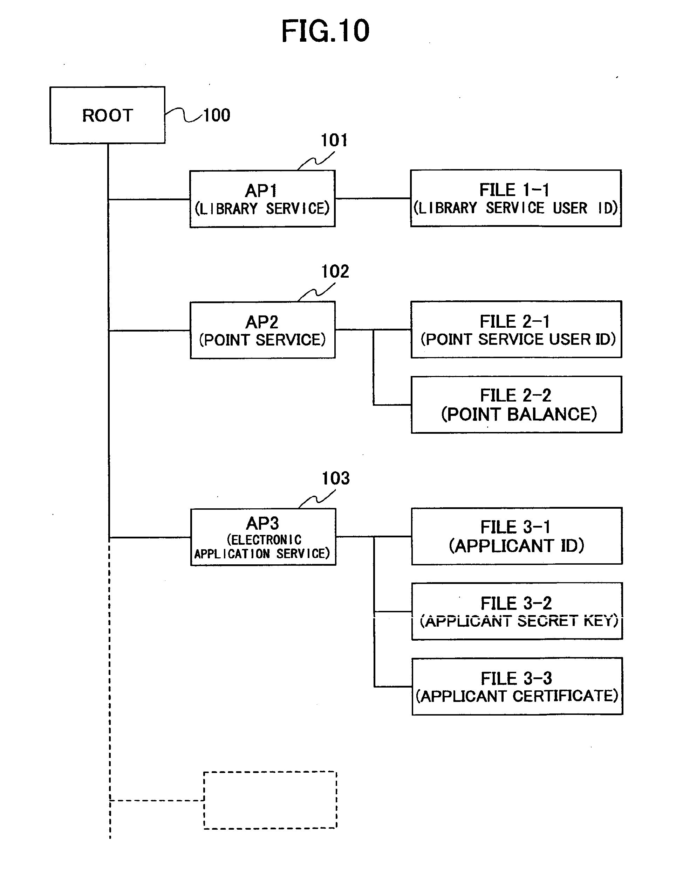

For example, the data of the plurality of service applications recorded in the IC card has a data structure as shown in FIG. 10.

In the root directory 100 shown in FIG. 10, there are respective directories, including the library service directory (AP1) 101, the point service directory (AP2) 102, the electronic application service directory (AP3) 103, etc. As the data for using the library service application (AP1), a file 1-1 containing the library user identification information (ID) is recorded on the directory 101. As the data for using the point service application (AP2), a file 2-1 containing the point user identification information (ID) and a file 2-2 including the point balance information are recorded on the directory 102.

As the data for using the electronic application service application (AP3), a file 3-1 containing the applicant identification information (ID), a file 3-2 including the applicant secret key information (password), and a file 3-3 including the applicant certificate information are recorded on the directory 103.

In order to resolve the above-mentioned problem of the conventional system when switching the IC card 2 to a new IC card for the reason of expiration of the term of validity or the like, the data transfer device 10 of the invention provides the function of transferring the data of the plurality of services installed in the old IC card 2 collectively to the new IC card, as shown in FIG. 2.

Therefore, when switching the IC card 2 in which the plurality of services are installed to the new IC card, what is required for the user (card holder) is to visit one place where the data transfer device 10 is installed, and there is no need for the user to go out to several places where the service providers for the plurality of services are installed. The data of the plurality of services in the old IC card 2 can be collectively transferred to the new IC card by the data transfer device 10.

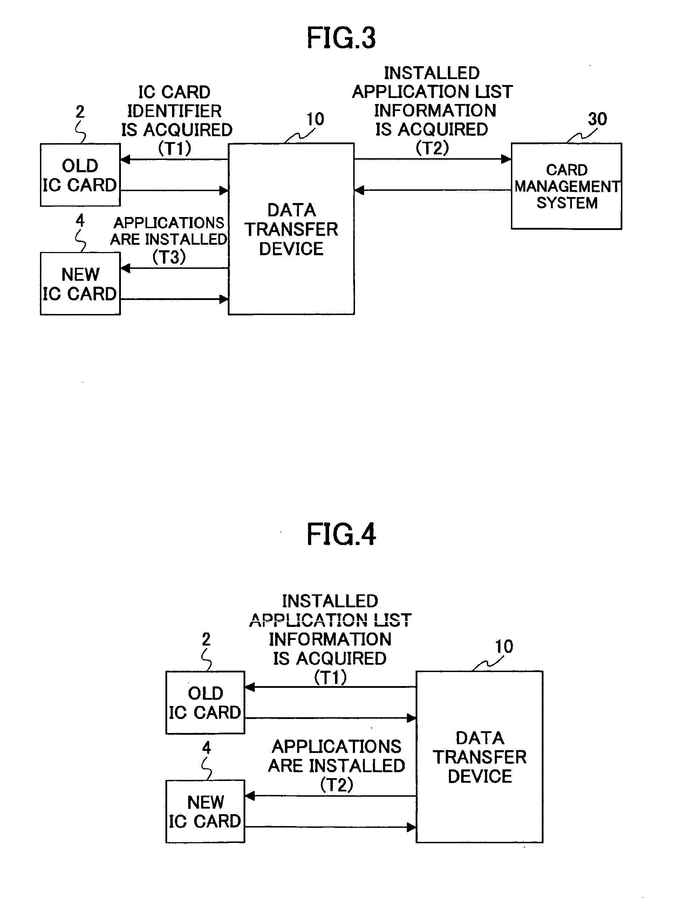

FIG. 3 shows the composition of the IC card operation management system in an embodiment of the invention.

As shown in FIG. 3, the IC card operation management system of this embodiment comprises the data transfer device 10 and a card management system 30 connected to the data transfer device 10 via a communication line.

When switching to a new IC card, the user inserts the old IC card 2 and the new IC card 4 in the data transfer device 10.

In the IC card operation management system of FIG. 3, the data transfer device 10 requests the card identifier information of the old IC card 2, and acquires the card identifier information from the old IC card 2 (T1).

The data transfer device 10 requests the card-installed application list information to the card management system 30 by using as a parameter the card identifier information acquired from the old IC card 2, and acquires the card-installed application list information of the old IC card 2 from the card management system 30 (T2).

The data transfer device 10 acquires the data (the transferred data) of all the service applications transferred from the old IC card 2 based on the card-installed application list information acquired and the user's selection. The data transfer device 10 records the transferred data of all the service applications on the new IC card 4 (T3).

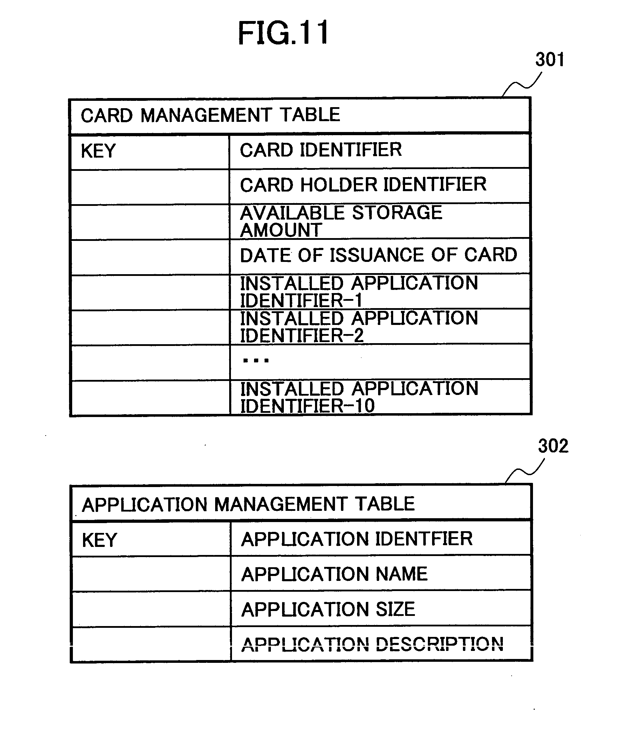

FIG. 11 is a diagram for explaining the structure of a database in the card management system 30 in the IC card operation management system of FIG. 3.

As shown in FIG. 11, the database in the card management system 30 contains a card management table 301 and an application (AP) management table 302.

The card management table 301 is used to access the card management information related to each IC card of the database in the card management system 30, by using any of a card identifier, a card holder identifier, an available storage amount of vacant card, a date of issuance of card, an installed application identifier 1, an installed application identifier 2, --, and an installed application identifier 10 as a key.

The application management table 302 is used to access the application management information related to each IC card of the database in the card management system 30 by using any of an application (AP) identifier, an application (AP) name, an application (AP) size, and an application (AP) description as a key.

The data transfer device 10 of FIG. 3 is provided with an internal database, and the internal database is provided with an application management table which is similar to the application management table 302 of FIG. 11.

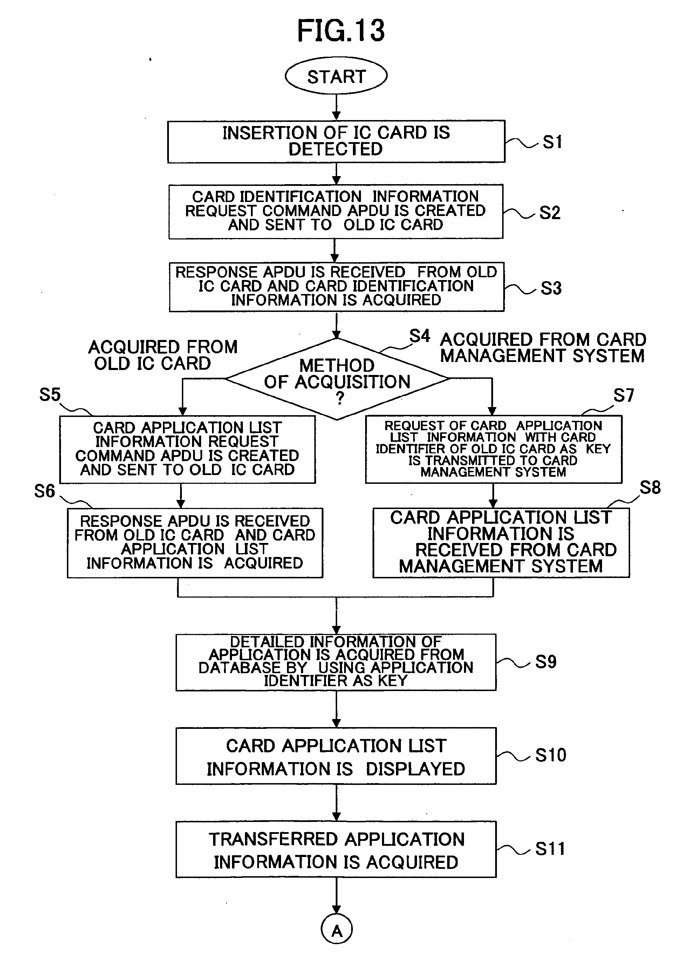

FIG. 13 is a flowchart for explaining the routine (steps S1 to S11) of the data transfer processing which is performed by the data transfer device 10 in the IC card operation management system of FIG. 3.

For example, the data transfer device 10 of FIG. 3 comprises a CPU, a RAM, a ROM, an I/O (I/O) controller, a display device, an input device, an IC card reader/writer, auxiliary memory, a communication controller, etc.

In the data transfer device 10 of FIG. 3, the CPU is a processor which controls the whole system of the data transfer device 10. When the power supply of the data transfer device 10 is set in ON state, the CPU reads the program pre-recorded on the ROM and loads the program to the RAM so that the respective control operations are performed.

In the data transfer device 10 of FIG. 3, the CPU is connected with each I/O device via the bus and the I/O controller. For example, a liquid crystal display (LCD) is used for the display device. For example, a keyboard and other operation keys are contained in the input device.

The IC card reader/writer is provided with the function of reading various items of information recorded in an IC card, and the function of writing various items of information to an IC card.

The IC card reader/writer may be of contact type which reads information from or writes information to an IC card in contact with the IC card, or may be of non-contact type in which information is read or written without contact with an IC card.

For example, a semiconductor memory card etc. is used for the auxiliary memory. The internal database and the card management information processed by the data transfer device 10 are recorded on the auxiliary memory. For example, an LAN card, a modem, etc. are used for the communication controller.

Upon start of the data transfer processing of FIG. 13, the data transfer device 10 detects insertion of the old IC card 2 and the new IC card 5 by the user in step S1.

In step S2, the data transfer device 10 creates a command APDU (application protocol data unit) which requests the card identifier information, and transmits the created command APDU to the old IC card 2.

In step S3, the data transfer device 10 receives a response APDU from the old IC card 2, and acquires the card identifier information from the received response APDU.

In step S4, the data transfer device 10 chooses an acquisition method of the application list information in the old IC card 2 from the method of acquisition from the old IC card 2, or the method of acquisition from the card management system 30.

When the method of acquisition from the old IC card 2 is chosen in the step S4, in step S5, the data transfer device 10 creates a command APDU which acquires the application list information in the old IC card 2, and transmits the created command APDU to the old IC card 2.

In step S6, the data transfer device 10 receives a response APDU from the old IC card 2, and acquires the application list information from the received response APDU.

On the other hand, when the method of acquisition from the card management system 30 is chosen in the step S4, in step S7, the data transfer device 10 requests the application list information of the old IC card 2 to the card management system 30 by using as a parameter the card identifier acquired from the old IC card 2.

In step S8, the data transfer device 10 receives the application list information of the old IC card 2 from the card management system 30. The list of identifiers of respective service applications installed in the old IC card 2 is included in the application list information acquired in the step S6 or S8.

When the step S6 or the step S8 is completed, the data transfer device 10 acquires in step S9 the detailed application information from the database of the data transfer device 10 by using as a parameter the identifier of each service application contained in the acquired application list information.

In step S10, the data transfer device 10 displays the acquired application list information of the old IC card 2 on the screen of the display device of the data transfer device 10. The user chooses the application that is taken over to the new IC card, by using the input device of the data transfer device 10, while confirming the application list of the old IC card 2 displayed on the screen of the display device. The data transfer device 10 records the application information taken over from the old IC card 2 in the internal database based on the user's selection.

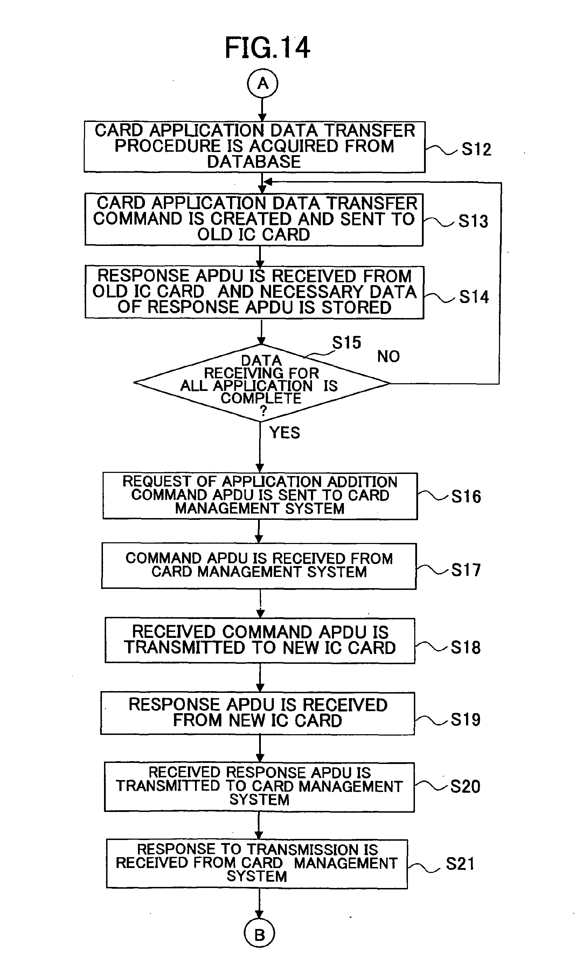

In step S11, the data transfer device 10 acquires the application information taken over from the old IC card 2, which is recorded in the step S10. When the above-mentioned step S11 is completed, the control is transferred to step S12 of FIG. 14.

FIG. 14 is a flowchart for explaining the routine (steps S12 to S21) of the data transfer processing which is performed by the data transfer device 10 of FIG. 3.

As shown in FIG. 14, the data transfer device 10 acquires information of the card application data transfer procedure from the database of the data transfer device 10 in step S12.

In step S13, the data transfer device 10 creates a command APDU which acquires the data of service applications from the old IC card 2, and transmits the created command APDU to the old IC card 2.

In step S14, the data transfer device 10 receives a response APDU from the old IC card 2, and stores the required information (the service application transfer information) included in the received response APDU in the database of the data transfer device 10.

In step S15, the data transfer device 10 determines whether acquisition of the data of all the service applications is completed.

When the result of the determination in the step S15 is NO, the above-mentioned steps S13 and S14 are repeated.

When the result of the determination in the step S15 is YES, the control is transferred to the following step S16.

In step S16, the data transfer device 10 requests the card management system 30 to send a command APDU for adding the data of the service application to the new IC card 4.

In step S17, the data transfer device 10 receives the command APDU from the card management system 30.

In step S18, the data transfer device 10 transmits the command APDU acquired from the card management system 30 to the new IC card 4.

In step S19, the data transfer device 10 receives a response APDU from the new IC card 4.

In step S20, the data transfer device 10 transmits the response APDU acquired from the new IC card 4, to the card management system 30.

In step S21, the data transfer device 10 receives a response to the transmitted response APDU, from the card management system 30.

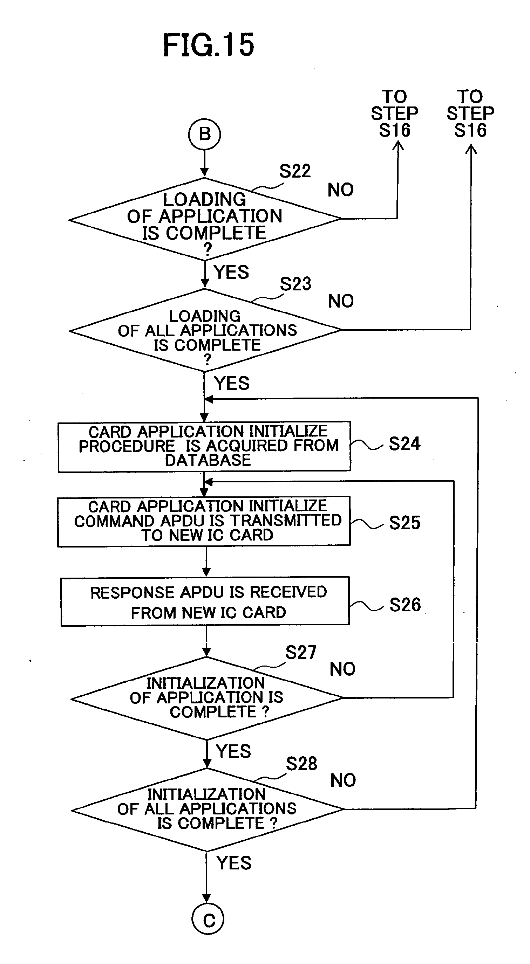

When the above-mentioned step S21 is completed, the control is transferred to step S22 of FIG. 15.

FIG. 15 is a flowchart for explaining the routine (steps S22 to S28) of the data transfer processing which is performed by the data transfer device 10 of FIG. 3.

As shown in FIG. 15, the data transfer device 10 determines in step S22 whether loading of the data of service applications which should be added is completed.

When the result of the determination in the step S22 is NO, the above-mentioned steps S16 to S21 are repeated. When the result of the determination in the step S22 is YES, the control is transferred to the following step S23.

In step S23, the data transfer device 10 determines whether loading of the data of all the service applications which should be added is completed.

When the result of the determination in the step S23 is NO, the above-mentioned steps S16 to S22 are repeated. When the result of the determination in the step S23 is YES, the control is transferred to the following step S24.

In step S24, the data transfer device 10 acquires the information of the procedure which initializes the service applications of the IC card, from the internal database.

In step S25, the data transfer device 10 creates a command APDU which initializes the service applications of the IC card, and transmits the created command APDU to the new IC card 4.

In step S26, the data transfer device 10 receives a response APDU from the new IC card 4.

In step S27, the data transfer device 10 determines whether initialization of one service application is completed, from the received response APDU. When the result of the determination in the step S27 is NO, the above-mentioned steps S25 and S26 are repeated. When the result of the determination in the step S27 is YES, the control is transferred to the following step S28.

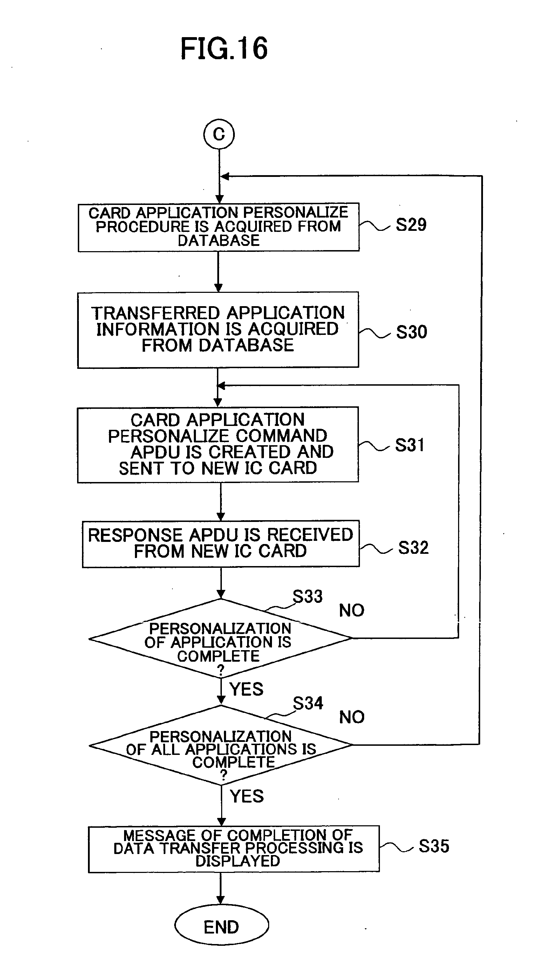

In step S28, the data transfer device 10 determines whether initialization of all the service applications in the new IC card 4 is completed. When the result of the determination in the step S28 is NO, the above-mentioned steps S25 to S27 are repeated. When the result of the determination in the step S28 is YES, the control is transferred to the following step S29 (FIG. 16).

FIG. 16 is a flowchart for explaining the routine (steps S29 to S35) of the data transfer processing which is performed by the data transfer device 10 of FIG. 3.

As shown in FIG. 16, in step S29, the data transfer device 10 acquires, from the database of the data transfer device 10, information of the card application personalize procedure for personalization of the service applications of the new IC card. The procedure for personalization of the service applications of the new IC card will be described later.

In step S30, the data transfer device 10 acquires the transferred data of all the service applications stored in the above-mentioned step S14, from the internal database.

In step S31, the data transfer device 10 creates a command APDU which personalizes one service application of the new IC card 4, and transmits the created card application personalize command APDU to the new IC card 4.

In step S32, the data transfer device 10 receives a response APDU from the new IC card 4.

In step S33, the data transfer device 10 determines whether the writing of the personalization information of the service application to the new IC card 4 is completed, from the received response APDU. When the result of the determination in the step S33 is NO, the above-mentioned steps S31 and S32 are repeated. When the result of the determination in the step S33 is YES, the control is transferred to the following step S34.

In step S34, the data transfer device 10 determines whether the writing of the personalization information of all the service applications to the new IC card 4 is completed. When the result of the determination in the step S34 is NO, the above-mentioned steps S29 to S33 are repeated. When the result of the determination in the step S34 is YES, the control is transferred to the following step S35.

In step S35, the data transfer device 10 displays on the screen of the display device a message indicating that the transfer of the service application data from the old IC card 2 to the new IC card 4 is completed. When the step S35 is completed, the data transfer processing of this embodiment is finished.

FIG. 4 shows the composition of the data transfer device in an embodiment of the invention.

The data transfer device 10 of FIG. 4 provides the function which transfers the data based on the information in the old IC card 2, to the new IC card 4, without connecting with the card management system 30 via the communication line.

When switching to a new IC card, the user inserts the old IC card 2 and the new IC card 4 in the data transfer device 10.

As shown in FIG. 4, the data transfer device 10 requests the card identifier information of the old IC card 2, and acquires the card identifier information from the old IC card 2. The data transfer device 10 requests the card installed application list information to the internal database by using as a parameter the card identifier information acquired from the old IC card 2, and acquires the card installed application list information of the old IC card 2 from the internal database (T1).

The data transfer device 10 acquires the data (the transferred data) of all the service applications from the old IC card 2, based on the card-installed application list information acquired and the user's selection.

The data transfer device 10 records the transferred data of all the service applications in the new IC card 4 (T2).

As described above with the embodiments of FIG. 3 and FIG. 4, the data transfer device 10 of the invention automatically records, at the time of data transfer, the data of the plurality of service applications recorded in the old IC card 2 in the new IC card 4, based on the information in the old IC card 2 or based on the information managed by the IC card operation management system.

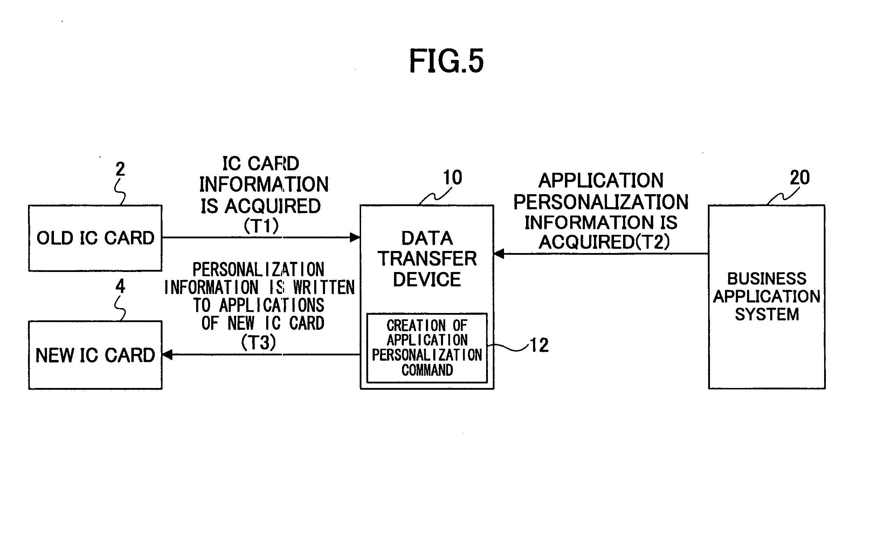

FIG. 5 shows the composition of the IC card operation management system in another embodiment of the invention.

In the IC card operation management system of FIG. 5, the data transfer device 10 acquires the service application information from the old IC card 2 (T1). The data transfer device 10 receives information of application personalization procedure from the business application system 20 (T2).

The data transfer device 10 creates an application personalization command using the application personalization command creation function 12 based on the service application information received from the old IC card 2 and the procedure information received from the business application system 20. And the data transfer device 10 transmits the created application personalization command to the new IC card 4 (T3).

In the new IC card 4, the application personalization information is written to the service applications of the new IC card 4 based on the received application personalization command.

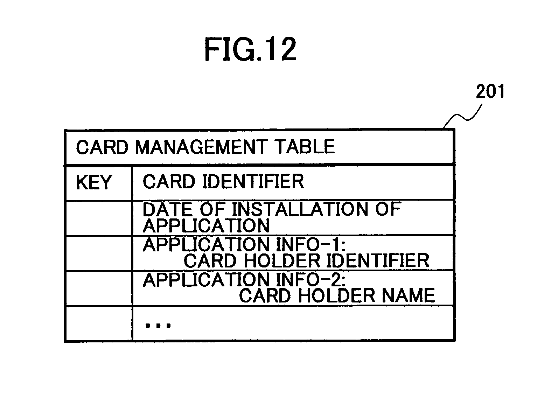

FIG. 12 is a diagram for explaining the structure of a database in the business application system 20 in the IC card operation management system of FIG. 5.

As shown in FIG. 12, the database in the business application system 20 contains a card management table 201. The card management table 201 is used to access the card management information related to each IC card of the database in the business application system 20 by using any of a card identifier, a date of installation of application (AP), an application information-1 (card holder identifier), an application information-2 (card holder name), etc.

According to the embodiment of FIG. 5, the load on the side of the business application system 20 which provides the service for security of the personalization information of an IC card when the personalization information of the IC card is processed by the data transfer device 10 can be reduced.

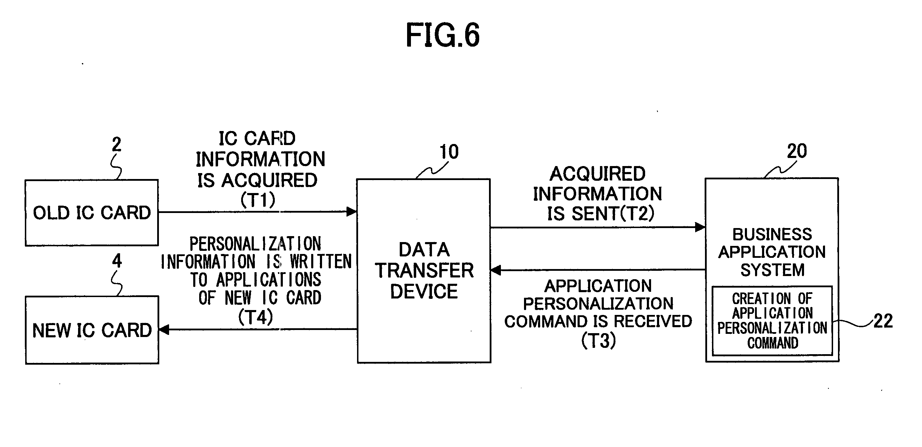

FIG. 6 shows the composition of the IC card operation management system in another embodiment of the invention.

In the embodiment of FIG. 6, the business application system 20 is provided to have a function 22 of creating an application personalization command.

In the IC card operation management system of FIG. 6, the data transfer device 10 acquires required information for application personalization from the old IC card 2 (T1).

The data transfer device 10 transmits the acquired information of the old IC card 2 to the business application system 20 (T2).

The business application system 20 creates an application personalization command using the application personalization command creation function 22 based on the received information of the old IC card 2, and transmits the created application personalization command to the data transfer device 10 (T3).

The data transfer device 10 records the application personalization information in the new IC card 4 based on the received application personalization command (T4).

According to the embodiment of FIG. 6, security of the personalization information of an IC card on the side of the business application system 20 which provides service can be ensured.

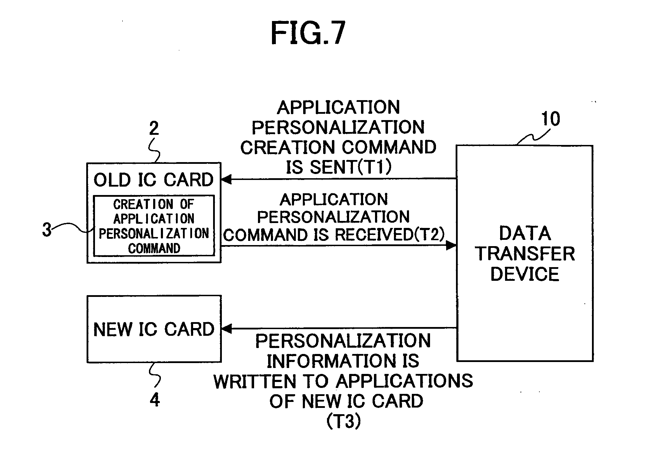

FIG. 7 shows the composition of the data transfer device in another embodiment of the invention.

In the embodiment of FIG. 7, the old IC card 2 is provided to have a function 3 of creating an application personalization command.

As shown in FIG. 7, the data transfer device 10 transmits an application personalization information creation command to the old IC card 2 (T1).

The old IC card 2 creates an application personalization command by using the application personalization command creation function 3 based on the received personalization information creation command, and transmits the created application personalization command to the data transfer device 10 (T2).

The data transfer device 10 records the application personalization information in the new IC card 4 based on the received application personalization command (T3).

According to the embodiment of FIG. 7, it is possible to record additional data, other than the data of the service applications in the old IC card 2, in the new IC card 4.

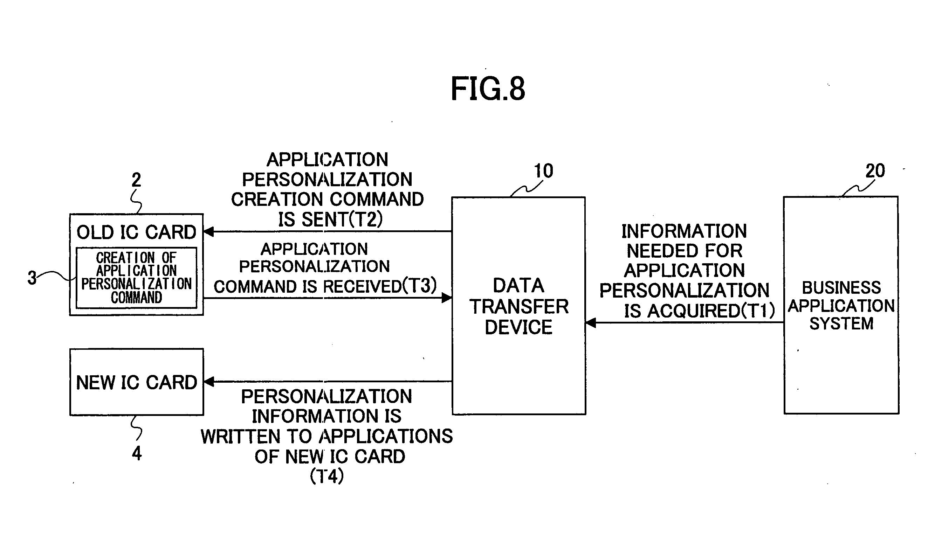

FIG. 8 shows the composition of the IC card operation management system in another embodiment of the invention.

In the embodiment of FIG. 8, the old IC card 2 is provided to have a function 3 of creating an application personalization command, and the data transfer device 10 is provided so that the information of the procedure required for application personalization can be acquired from the business application system 20.

In the IC card operation management system of FIG. 8, the data transfer device 10 acquires the information of the procedure required for the application personalization, sent from the business application system 20 (T1).

The data transfer device 10 transmits an application personalization information creation command to the old IC card 2 by using as a parameter the acquired procedure information (T2).

The old IC card 2 creates an application personalization command by using the application personalization command creation function 3 based on the received personalization information creation command, and transmits the created application personalization command to the data transfer device 10 (T3).

The data transfer device 10 records the application personalization information in the new IC card 4 based on the received application personalization command (T4).

According to the embodiment of FIG. 8, it is possible to record additional data, other than the data of the service applications in the old IC card 2, in the new IC card 4.

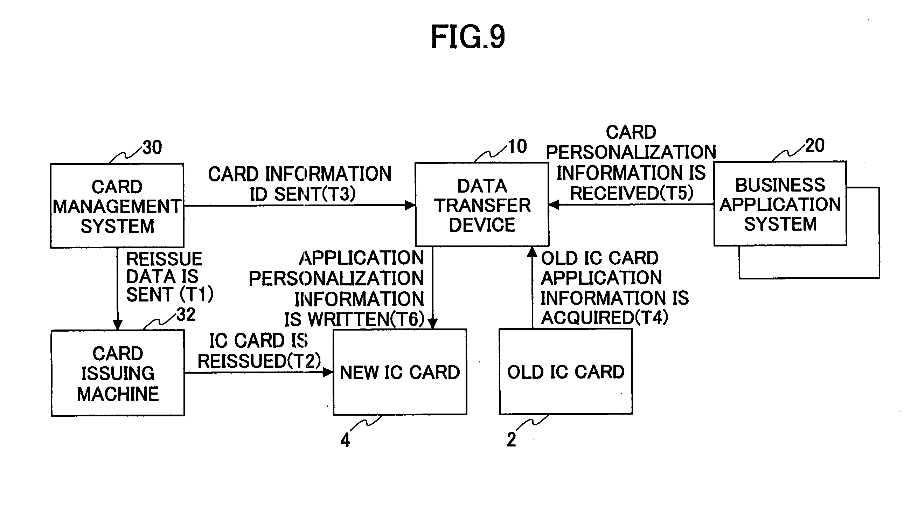

FIG. 9 shows the composition of the IC card operation management system in another embodiment of the invention.

In the IC card operation management system of FIG. 9, the card management system 30 extracts the IC card which is subjected to re-issuance. The IC card which is subjected to re-issuance may include an IC card the term of validity of which will expire, an IC card the kind of which will be changed, etc.

The card management system 30 transmits the re-issuance data to the card issuing machine 32 (T1), and performs re-issuance of a new IC card (or the continuous issuance of a new IC card may be performed). Specifically, the card issuing machine 32 may perform any of IC encoding, MS encoding, printing of card surface, etc.

The new IC card 4 which is issued in the card management system 30 is distributed to a card holder (T2). The means for distributing the new IC card may include mailing, hand delivery by a window service, etc.

Similar to the above-mentioned embodiments, when the card holder (user) inserts the old IC card 2 and the new IC card 4 in the data transfer device 10 at the time of switching the IC card, the card data transfer processing of the data transfer device 10 starts.

The data transfer device 10 monitors the data and the file space of the service applications recorded in the old IC card 2. There are two methods of monitoring the data and the file space: a method (T3) of monitoring using the data managed by the card management system 30, and a method (T4) of monitoring using the application information acquired from the old IC card.

The data transfer device 10 creates the personalization information of each service application in the IC card. The personalization information which is recorded in the service application area or the service application for each service application in the new IC card 4 is created. The resources for creating the personalization information may include the information (T4) read from the old IC card 2, the information (T5) managed by the business application system 20, etc.

The data transfer device 10 performs the addition and initialization of the service applications recorded in the old IC card 2 to the new IC card 4. Based on the data of the service applications recorded in the old IC card 2, each application is added to the new IC card 4 (or to the service application area), and initialization thereof is performed if needed.

The data transfer device 10 records the created personalization information in the new IC card 4 (T6).

According to the IC card operation management system of the embodiment of FIG. 9, it is possible that the data transfer device located at one place easily transfers all the service applications in the old IC card and the data of each service application of the old IC card to the new IC card. It is no longer necessary for the card holder to carry both the old IC card and the new IC card while transferring of the data on the 1C card is not completed, as in the conventional system.

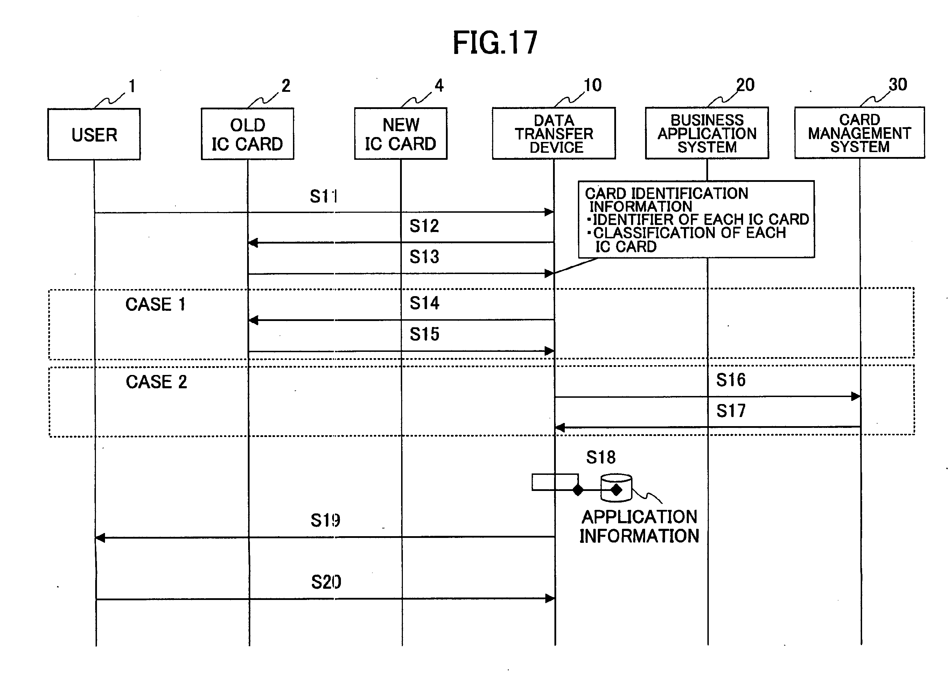

FIG. 17 is a diagram for explaining the card installed service application information acquisition and display processing which is performed by the IC card operation management system in an embodiment of the invention.

First, the processing of FIG. 17 is started when the user 1 inserts the old IC card 2 and the new IC card 4 in the data transfer device 10 (S11).

The data transfer device 10 transmits the command which requests the card identifier information, to the old IC card 2 (S12), and receives the card identifier information from the old IC card 2 (S13). In the card identifier information received at this time, the identification information of each IC card and the kind-of-IC-card information are included.

Next, the data transfer device 10 acquires the card installed application information. There are two methods of acquisition: a method (case 1) of acquiring the card installed application information from the old IC card 2, and a method (case 2) of acquiring the card installed application information using the data managed by the card management system 30.

When the first acquisition method is chosen (case 1), the data transfer device 10 transmits the command which requests the installed application information, to the old IC card 2 (S14), and receives the installed application information (the application identification information) from the old IC card 2 (S15).

When the second acquisition method is chosen (case 2), the data transfer device 10 transmits the command which requests the installed application information, to the card management system 30 (S16), and receives the installed application information (the application identification information) from the card management system 30 (S17).

The data transfer device 10 displays the card installed service application information on the screen of the display device. That is, the data transfer device 10 displays the card installed service application information of the old IC card 2 acquired in the step S15 or S17, on the screen of the display device (S18).

The user 1 checks the application information of the old IC card 2 displayed on the screen of the display device in the step S18 (S19). The user 1 chooses the application to be transferred to the new IC card, by using the input device of the data transfer device 10 (S20).

The data transfer device 10 records the application information to be transferred from the old IC card 2, in the internal database based on the user's selection.

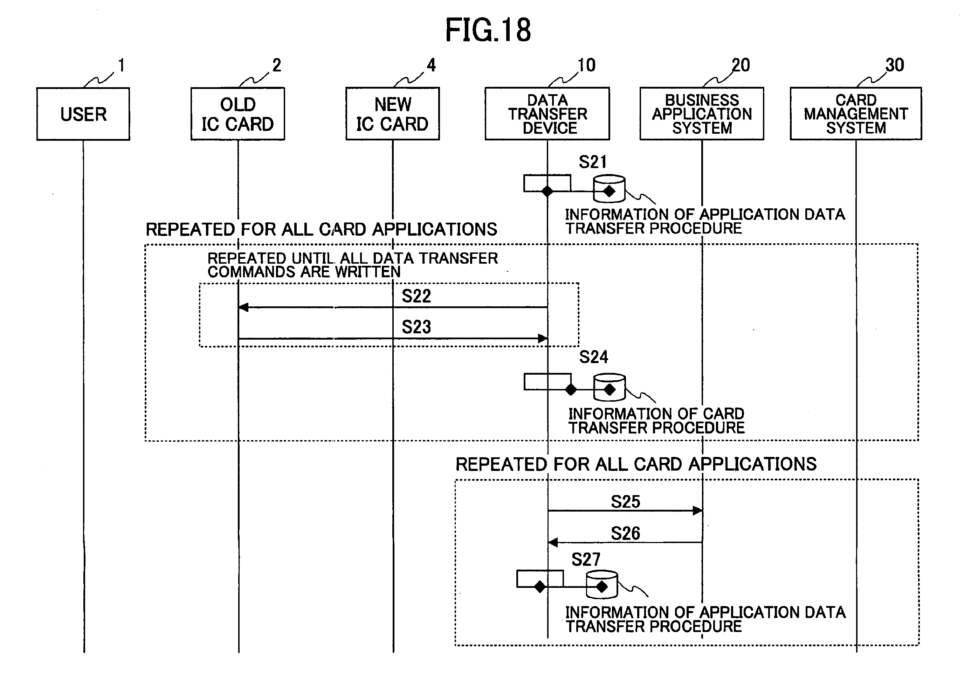

FIG. 18 is a diagram for explaining the transferred data collection processing which is performed by the IC card operation management system in this embodiment.

In the processing of FIG. 18, the data transfer device 10 acquires the information of the transferred data collection procedure. The data transfer device 10 acquires the information of the transferred data collection procedure for every application being transferred, from the internal database (S21).

Alternatively, the data transfer device 10 may acquire the information of the transferred data collection procedure for every application being transferred, from the database of the business application system 20. In this case, the data transfer device 10 transmits the request of the transferred data collection procedure including the card identifier information (card ID) of the old IC card 2 etc., to the business application system 20 (S25). The data transfer device 10 receives the information of the transferred data collection procedure for every application being transferred, from the database of the business application system 20 (S26). The data transfer device 10 records the received transferred data collection procedure to the internal database (S27).

Next, based on the acquired transferred data collection procedure, the data transfer device 10 collects the data being transferred from the old IC card 2. For every application, the data transfer device 10 creates a command APDU for acquiring the transferred data, and transmits the created command APDU to the old IC card 2 (S22).

The data transfer device 10 receives a response APDU from the old IC card 2, and acquires the transferred data from the received response APDU (S23). The processing of the steps S22 and S23 is repeated until all the commands APDU for acquiring the transferred data are written to the old IC card 2.

The data transfer device 10 records the transferred data acquired from the old IC card 2, in the internal database (S24). The processing of the steps S22 to S24 is repeated until the transferred data of all the service applications of the old IC card 2 are acquired.

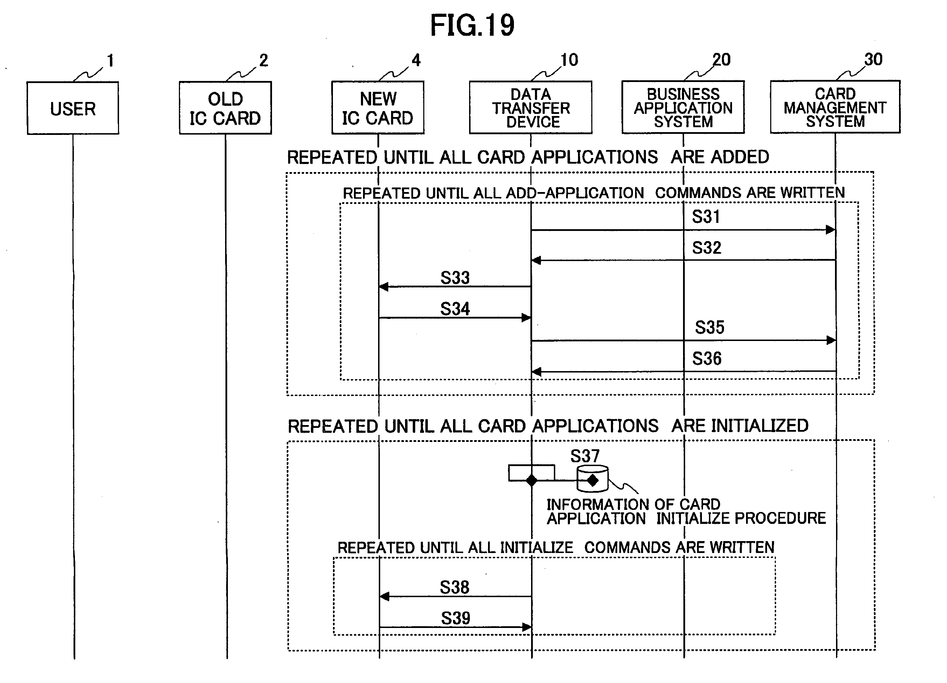

FIG. 19 is a diagram for explaining the service application addition and initialization processing which is performed to the new IC card by the IC card operation management system in this embodiment.

In the processing of FIG. 19, the data transfer device 10 performs the service application addition processing to the new IC card 4 first.

The data transfer device 10 transmits the request of the application addition procedure, containing the card application identification information of the old IC card 2, to the card management system 30 (S31).

The data transfer device 10 receives the application addition procedure for every application being transferred, from the database of the card management system 30 (S32). The data transfer device 10 records the received application addition procedure to the internal database of the data transfer device 10.

The data transfer device 10 creates a card application addition command APDU based on the acquired application addition procedure, and transmits the created card application addition command APDU to the new IC card 4 (S33).

The data transfer device 10 receives a response APDU to the transmitted card application addition command, from the new IC card 4 (S34).

The data transfer device 10 transmits the response APDU to the card application initialization command, to the card management system 30 (S35).

The data transfer device 10 receives a response to the transmitted response APDU, from the card management system 30 (S36).

The proceeding of the above-mentioned steps S31 to S36 is repeated until all the card applications are added.

Next, the data transfer device 10 performs the service application initialization processing to the new IC card 4.

The data transfer device 10 acquires the information of the card application initialize procedure for every application being transferred, from the internal database (S37) .

The data transfer device 10 creates a card application initialize commands APDU based on the acquired procedure, and transmits the created card application initialize command APDU to the new IC card 4 (S38).

The data transfer device 10 receives a response APDU to the transmitted card application initialize command, from the new IC card 4 (S39).

The processing of the above-mentioned steps S37 to S39 is repeated until all the card applications are initialized.

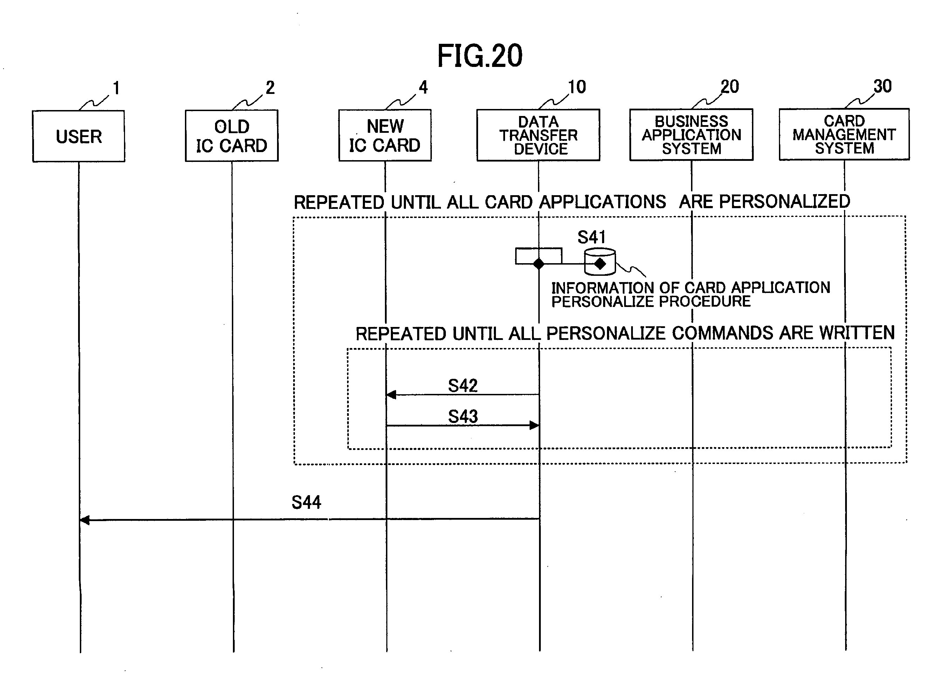

FIG. 20 is a diagram for explaining the service application personalization processing which is performed to the new IC card by the IC card operation management system in this embodiment.

In the processing of FIG. 20, the data transfer device 10 records the personalization information for all the card applications in the new IC card 4.

The data transfer device 10 acquires the information of the card application personalize procedure for every application being transferred, from the internal database (S41).

The data transfer device 10 creates a card application personalization command APDU based on the acquired procedure, and transmits the created card application personalization command APDU to the new IC card 4 (S42).

The data transfer device 10 receives a response APDU to the transmitted card application personalization command, from the new IC card 4 (S43).

The processing of the above-mentioned steps S41 to S43 is repeated until all the card applications are personalized.

When the above-mentioned procedure is completed, the data transfer device 10 displays on the screen of the display device a message indicating that the data transfer processing is completed (S44).

The user 1 checks the displayed message indicating the completion of the data transfer processing on the screen of the display device.

As described in the foregoing, according to the IC card operation management system of the invention, it is possible for the data transfer device, which is located at one place, to take over easily all the service applications in the old IC card and the data of each service application to the new IC card. It is no longer necessary that the card holder carries both the old IC card and the new IC card while taking over of the data on the IC card is not completed, as required in the conventional system.

The present invention is not limited to the above-described embodiments, and variations and modifications may be made without departing from the scope of the present invention.

## Claims

1. A data transfer device which performs a data transfer processing to transfer data of a plurality of service applications in an old IC card to a new IC card, the data transfer device comprising:
a list information acquisition unit acquiring application list information of the plurality of service applications in the old IC card based on card identifier information acquired from the old IC card; and
a data acquisition unit acquiring the transferred data of the plurality of service applications in the old IC card based on the acquired application list information, and recording the transferred data in the new IC card.

2. An IC card operation management system including a data transfer device, a business application system, and a card management system, the data transfer device performing a data transfer processing to transfer data of a plurality of service applications in an old IC card to a new IC card and comprising:
an identifier information acquisition unit requesting card identifier information to the old IC card and acquiring the card identifier information from the old IC card;
a list information acquisition unit requesting application list information of the plurality of service applications in the old IC card to the card management system based on the acquired card identifier information, and acquiring the application list information from the card management system; and
a data acquisition unit acquiring the transferred data of the service applications in the old IC card based on the acquired application list information, and recording the transferred data in the new IC card.

3. The IC card operation management system according to claim 2 wherein one of the data transfer device and the business application system is provided with an application personalize command creation function, and the data transfer device further comprises a first unit acquiring information required for application personalization from the old IC card, and a second unit recording the acquired information required for the application personalization in the new IC card based on an application personalize command which is created by said one of the data transfer device and the business application system.

4. The data transfer device according to claim 1 wherein the old IC card is provided with an application personalize command creation function, and the data transfer device further comprises a first unit requesting the old IC card to create information required for application personalization, and a second unit recording the information required for the application personalization in the new IC card based on an application personalize command which is created by the old IC card according to the request.

5. The IC card operation management system according to claim 2 wherein the data transfer device is provided with an application personalize command creation function, and the data transfer device further comprises a first unit acquiring information required for application personalization sent from the business application system, a second unit requesting the old IC card to create the information required for the application personalization, based on the acquired information, and a third unit recording the information required for the application personalization in the new IC card, based on an application personalization command which is sent by the old IC card according to the request.
